# EUROPÄISCHE PATENTANMELDUNG

(11) **EP 1 477 216 A1**
(43) Veröffentlichungstag der Anmeldung: **17.11.2004**
(21) Anmeldenummer: 04405232.2
(22) Anmeldetag: 15.04.2004
(51) Int. Cl.: B01D 46/42

(54) **Filtervorrichtung**

(30) Priorität: 14.05.2003 EP 03101356
(71) Anmelder: Levitronix LLC, Waltham, MA 02451 (US)
(72) Erfinder: Schöb, Reto, Dr., 8964 Rudolfstetten (CH)
(74) Vertreter: Sulzer Management AG

(57) **Zusammenfassung**

Es wird eine Filtervorrichtung zum Ausfiltern von Substanzen aus einem Fluid vorgeschlagen mit einem Filtergehäuse (2), das einen Filterraum (6) begrenzt und das einen Einlass (3) und einen Auslass (4) für das zu filternde Fluid aufweist, sowie mit einem im Filterraum (6) vorgesehene Filterelement (5), welches so ausgestaltet und angeordnet ist, dass im Betriebszustand das zu filternde Fluid nur durch das Filterelement (5) vom Einlass (3) zum Auslass (4) des Filtergehäuses (2) strömen kann, wobei eine Heizeinrichtung (10) zum Heizen des Fluids vorgesehen ist, die eine Mikrowellenquelle (11) zur Beaufschlagung des Fluids mit Mikrowellen umfasst.

## Beschreibung

Die Erfindung betrifft betrifft eine Filtervorrichtung zum Ausfiltern von Substanzen aus einem Fluid gemäss dem Oberbegriff des unabhängigen Patentanspruchs.

In vielen industriellen Prozessen besteht die Notwendigkeit, ein Fluid vor seiner weiteren Verwendung einer Filterung zu unterziehen, um unerwünschte Verunreinigungen aus dem Fluid zu entfernen. Als ein Beispiel sei hier die Halbleiter- und Chipherstellung genannt. Beispielsweise müssen die Fotolacke, die auf die Halbleiterstrukturen aufgebracht werden, höchsten Anforderungen an die Reinheit entsprechen. Auch in den chemischmechanischen Polierprozessen (CMP, chemical-mechanical polishing), in denen eine als Slurry bezeichnete Suspension aus typischerweise sehr feinen Feststoffpartikeln und einer Flüssigkeit auf einen rotierenden Wafer aufgebracht wird, und dort zum Polieren bzw. Läppen der sehr feinen Halbleiterstrukturen dient, sind Prozessfilter notwendig, um gegebenenfalls vorhandenen Verunreinigungen oder Verklumpungen aus dem Slurry zu entfernen. Solche Verunreinigungen könnten nämlich erhebliche Schäden auf den empfindlichen Halbleiterstrukturen verursachen.

Häufig werden derartige Prozesse in Reinräumen der höchsten Kategorie (Klasse 1) durchgeführt. Da diese Reinräume sehr kostenintensiv sind, ist es wünschenswert, möglichst kleine und kompakte Vorrichtungen zur Verfügung zu haben, die wenig Platzbedarf haben.

Da die in der Halbleiterfertigung eingesetzten Fluide häufig stark abrasiv (z. B. Slurry) oder chemisch sehr aggressiv sind, werden für die Prozessfilter spezielle Materialien verwendet. Das Filterelement bzw. die Filtermembran wird häufig aus Polytetrafluorethylen (PTFE, Handelsname Teflon) hergestellt.

Für die Herstellung der Filtergehäuse wird häufig das Perfluoralkoxy-Copolymer (PFA) verwendet, das sich durch seine hohe chemische Resistenz gegenüber aggressiven Substanzen auszeichnet und im Vergleich zu PTFE den Vorteil hat, dass es mittels Spritzgiessverfahren verarbeitet werden kann.

Neben der Filterung ist es in den Prozessen auch häufig eine Notwendigkeit, das Fluid auf eine vorgegebene Temperatur aufzuheizen bzw. die Temperatur des Fluids zu regeln, um eine optimale Prozessführung zu gewährleisten. Hierzu ist es beispielsweise bekannt, die PFA-Gehäuse, die das Fluid enthalten oder von dem Fluid durchströmt werden, nach dem Prinzip eines Wärmetauschers mit einem Wärmeträger in thermischen Kontakt zu bringen. Da PFA jedoch ein schlechter Wärmeleiter ist, sind solche Heizsysteme mit dem Nachteil einer hohen thermischen Zeitkonstante behaftet. Diese thermische Trägheit macht eine Regelung der Temperatur zumindest sehr schwierig.

Ferner ist es bekannt, Infrarotstrahlung zum Heizen der Fluide zu verwenden. Hierzu ist jedoch ein optischer Zugang zu dem Fluid notwendig. Beispielsweise ist es möglich, mehrere Glasröhren um eine Infrarotquelle herum anzuordnen und das Fluid durch diese Glasröhren strömen zu lassen, in denen dann das Fluid mit Infrarotstrahlung beaufschlagbar ist. Diese Methode kann jedoch für stark ätzende Flüssigkeiten wie beispielsweise Flusssäure (HF) nicht verwendet werden, weil solche Flüssigkeiten das Glas angreifen.

Ausgehend von diesem Stand der Technik ist es daher eine Aufgabe der Erfindung, eine Filtervorrichtung vorzuschlagen, die auch für abrasive und/oder aggressive Fluide geeignet ist und zudem ein effizientes Heizen des Fluids ermöglicht. Im Speziellen soll die Vorrichtung für den Einsatz in der Halbleitertechnologie und für Reinraumanwendungen beispielsweise auf dem Gebiet der Medizinaltechnik geeignet sein.

Die diese Aufgabe lösende Filtervorrichtung zum Ausfiltern von Substanzen aus einem Fluid ist durch die Merkmale des unabhängigen Patentanspruchs gekennzeichnet.

Erfindungsgemäss wird also eine Filtervorrichtung zum Ausfiltern von Substanzen aus einem Fluid vorgeschlagen, mit einem Filtergehäuse, das einen Filterraum begrenzt und das einen Einlass und einen Auslass für das zu filternde Fluid aufweist, sowie mit einem im Filterraum vorgesehene Filterelement, welches so ausgestaltet und angeordnet ist, dass im Betriebszustand das zu filternde Fluid nur durch das Filterelement vom Einlass zum Auslass des Filtergehäuses strömen kann, wobei eine Heizeinrichtung zum Heizen des Fluids vorgesehen ist, die eine Mikrowellenquelle zur Beaufschlagung des Fluids mit Mikrowellen umfasst.

Das Heizen des Fluids mittels Mikrowellen stellt eine äusserst effiziente und wenig aufwändige Massnahme dar, um das - typischerweise wasserhaltige - Fluid auf die gewünschte Temperatur zu bringen. Es bedarf keines körperlichen oder thermischen Kontakts mit dem Fluid und auch Wärmeträger sind nicht vonnöten. Die für das Heizen des Fluids benötigte Energie wird unmittelbar durch die Mikrowellen in das Fluid eingebracht. Aus dieser direkten Energieeinkopplung resultiert eine sehr kurze thermische Zeitkonstante, sodass eine Temperaturregelung mit der erfindungsgemässen Filtervorrichtung deutlich einfacher und besser realisierbar ist. Zudem sind die typischerweise für Filtervorrichtungen verwendeten Materialien, wie beispielsweise die Hochtemperaturpolymere PTFE und PFA im Mikrowellenbereich weitgehend transparent, das heisst sie weisen wenn überhaupt nur ein geringes Absorptionsvermögen für Mikrowellen auf.

Mikrowellenquellen wie beispielsweise ein Betatron oder Magnetron sind heute sehr kostengünstig erhältlich. Sie sind für die mit ihnen erzielbare Leistung sehr kompakt und ermöglichen somit eine äusserst platzsparende Ausgestaltung der erfindungsgemässen Filtervorrichtung, was insbesondere im Hinblick auf Anwendungen im Reinraum ein Vorteil ist.

Um ein unerwünschtes Austreten der Mikrowellen in die Umwelt zu verhindern kann ein Wellenleiter vorgesehen sein, welcher die Ausbreitung der Mikrowellen im wesentlichen auf den Filterraum beschränkt. Beispielsweise ist es möglich, dass die Filtervorrichtung als Wellenleiter eine äussere Ummantelung aufweist, die als Lochblech, metallisches Gitter oder Netz ausgestaltet ist, sodass sie den Aussenraum gegen die Mikrowellen abschirmt. Ferner ist es möglich, das Filtergehäuse an seiner äusseren und/oder inneren Oberfläche mit einer leitenden Schicht zur Abschirmung zu versehen. Diese Schicht kann aus einem Lack oder einem metallischen Lack bestehen. Die Schicht kann auch aufgedampft oder mittels an sich bekannter Verfahren auf der Oberfläche des Filtergehäuses deponiert bzw. generiert werden.

Gemäss einer bevorzugten Ausgestaltung weist das Filterelement einen Innenraum auf, der von einer Filtermembran umgeben wird. Die Mikrowellen können bezüglich des Filterelements von aussen in den Filterraum eingebracht werden.

Gemäss einem anderen Ausführungsbeispiel werden die Mikrowellen aus dem Innern des Filterelements in den Filterraum eingebracht. Beispielsweise ist das Filterelement im wesentlichen zylindrisch ausgestaltet, wobei die Filtermembran auf der Mantelfläche des Zylinders vorgesehen ist. Die Mikrowellen können dann in das Innere des Filterelements eingeleitet werden, um sich von dort nach aussen im gesamten Filterraum auszubreiten. Dies hat den Vorteil, dass das Fluid selbst als Schirm für die Mikrowellen dient, weil das Fluid die Mikrowellen absorbiert. Eine metallische äussere Ummantelung ist dann nicht mehr vonnöten.

Insbesondere im Hinblick auf eine Temperaturregelung ist es vorteilhaft, wenn Sensoren vorgesehen sind, um die Temperatur des Fluids am Einlass und die Temperatur des Fluids am Auslass zu bestimmen. Diese Massnahme hat ferner den Vorteil, dass aus diesen beiden Temperaturen der Durchfluss bestimmbar ist.

Da einige der für Filtergehäuse verwendeten Materialien, beispielsweise PFA, ein geringfügiges Absorptionsvermögen im Mikrowellenbereich besitzen und sich daher unter der Einwirkung der Mikrowellen erhitzen können, sollte der Filterraum während des Betriebs immer vollständig mit Fluid gefüllt sein, um lokale Überhitzungen des Filtergehäuses zu vermeiden. Daher ist es vorteilhaft, wenn die Filtervorrichtung mit einem Füllstandssensor zum Überwachen des Füllstands des Filterraums versehen ist.

Vorzugsweise ist eine Überwachung vorgesehen, welche die Beaufschlagung des Filterraums mit Mikrowellen verhindert, falls der Filterraum nicht vollständig mit Fluid gefüllt ist. Beispielsweise kann die Überwachung bei Detektion eines nicht vollständig mit Fluid gefüllten Filterraums die Mikrowellenquelle deaktivieren.

Die erfindungsgemässe Filtervorrichtung kann auch vorteilhaft mit einer Pumpeinrichtung zum Fördern des Fluids vom Einlass zum Auslass versehen werden. Auf diese Weise ist eine äusserst kompakte Vorrichtung realisierbar, welche die drei Funktionen Filtern, Heizen und Pumpen ausführen kann. Die Pumpeinrichtung wird vorzugsweise in den Einlass der Filtervorrichtung integriert. Vorteilhafterweise wird die Pumpeinrichtung lösbar mit dem Rest der Filtervorrichtung verbunden, um ein einfaches Auswechseln des Filterelements zu ermöglichen.

Im Hinblick auf ein äusserst kompakte, platzsparende und leistungsstarke Ausgestaltung ist es vorteilhaft, wenn die Pumpeinrichtung eine Rotationspumpe umfasst, die einen Integralrotor aufweist und die als lagerloser Motor ausgestaltet ist.

Das Filterelement ist vorzugsweise als austauschbare Filterpatrone ausgestaltet.

Insbesondere für Anwendungen im Halbleiterbereich oder für medizinische Anwendungen kann das Filterelement eine Trenngrenze aufweisen, die weniger als zehn Mikrometer, vorzugsweise höchstens 100 Nanometer beträgt.

Vorzugsweise besteht das Filtergehäuse im wesentlichen aus einer Keramik oder aus einem Polymer, insbesondere aus Perfluoralkoxy-Copolymer (PFA) oder aus Polytetrafluorethylen (PTFE) oder aus Polyvinylidenfluorid (PVDF) oder aus Polypropylen (PP). Dadurch ist die Filtervorrichtung auch für problematische Fluide geeignet, beispielsweise abrasive Fluide wie Slurry, aggressive oder chemisch sehr reaktive Substanzen, ätzende Substanzen wie Säure und insbesondere Flusssäure.

Ferner ist es vorteilhaft, wenn eine Kontrolleinrichtung vorgesehen ist, die Mittel zur Bestimmung des Durchflusses mit Hilfe der Differenz aus der Temperatur des Fluids am Auslass und der Temperatur des Fluids am Einlass umfasst. Somit kann ohne grösseren apparativen Aufwand der Durchfluss durch die Filtervorrichtung bestimmt werden.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen teilweise im Schnitt:
- Fig. 1:: ein erstes Ausführungsbeispiel einer erfindungsgemässen Filtervorrichtung,
- Fig.2:: eine Variante des ersten Ausführungsbeispiels,
- Fig. 3:: ein zweites Ausführungsbeispiel einer erfindungsgemässen Filtervorrichtung, und
- Fig 4:: ein weiteres Ausführungsbeispiel einer erfindungsgemässen Filtervorrichtung, bei welchem eine Pumpeinrichtung vorgesehen ist.

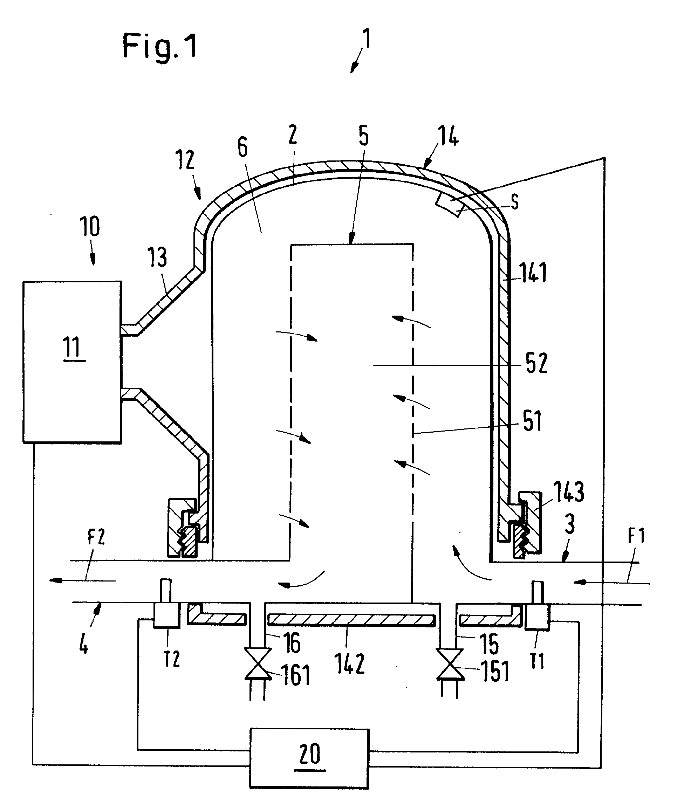

Fig. 1 zeigt in einer schematischen, teilweise geschnittenen Darstellung ein erstes Ausführungsbeispiel einer erfindungsgemässen Filtervorrichtung, die gesamthaft mit dem Bezugszeichen 1 bezeichnet ist.

Im Folgenden wird beispielhaft auf eine für die Praxis besonders wichtige Anwendung Bezug genommen, nämlich, dass die Filtervorrichtung 1 in einem Fertigungsprozess in der Halbleiterindustrie eingesetzt wird, beispielsweise als Prozessfilter in einem CMP-Prozess (CMP: chemical-mechanical polishing). Bei diesen Prozessen wird eine als Slurry bezeichnete Suspension von feinen Festkörperteilchen in einer Flüssigkeit auf einen rotierenden Wafer aufgebracht und dient dort zum Läppen bzw. Polieren der sehr feinen Halbleiterstrukturen. Um Beschädigungen der Wafer oder das Eindringen von unerwünschten Substanzen zu verhindern, müssen Verklumpungen und Verunreinigungen vorgängig aus dem Slurry ausgefiltert werden. Das zu filternde Fluid ist in diesem Fall also Slurry. Die erfindungsgemässe Filtervorrichtung eignet sich jedoch auch für andere Prozessflüssigkeiten wie beispielsweise Fotolack.

Die Filtervorrichtung 1 umfasst ein Filtergehäuse 2, das einen Filterraum 6 begrenzt. Das Filtergehäuse 2 weist einen Einlass 3 auf, durch welchen das Fluid in die Filtervorrichtung 1 einbringbar ist, sowie einen Auslass 4, durch welchen das gefilterte Fluid abgeführt wird. Im Filterraum 6 ist ein Filterelement 5 vorgesehen, dass nur schematisch dargestellt ist. Das Filterelement 5 ist hier in an sich bekannter Weise als eine austauschbare Filterpatrone ausgestaltet. Das Filterelement 5 hat eine im wesentlichen zylindrische Form. Auf der Mantelfläche des Zylinders ist eine Filtermembran 51 vorgesehen, die einen Innenraum 52 des Filterelements 5 begrenzt. Das Filterelement 5 ist so angeordnet, dass im Betriebszustand das zu filternde Fluid nur durch das Filterelement 5 hindurch vom Einlass 3 zum Auslass 4 strömen kann. Wie dies die Pfeile in Fig. 1 andeuten, strömt das Fluid durch den Einlass 3 (Pfeil F1) in den Teil des Filterraums 6, der sich ausserhalb des zylindrischen Filterelements 5 befindet. In der Folge durchströmt das Fluid die Filtermembran 51 von aussen nach innen wie dies die Pfeile ohne Bezugszeichen andeuten und gelangt in den Innenraum 52 des Filterelements 5. Dabei werden die auszufilternden Substanzen von der Filtermembran 51 zurückgehalten. Der Innenraum 52 des Filterelements 5 steht in Strömungsverbindung mit dem Auslass 4, sodass das Fluid aus dem Innenraum 52 durch den Auslass 4 (Pfeil F2) aus der Filtervorrichtung 1 ausströmen kann.

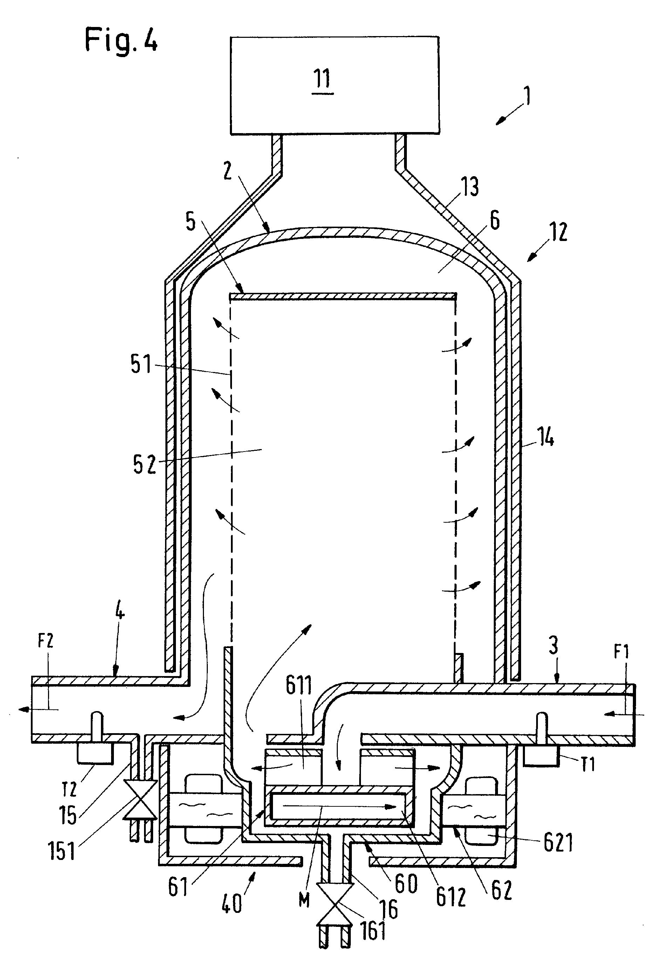

Selbstverständlich ist es auch möglich, den Einlass 3 und den Auslass 4 zu vertauschen. Dann wird das ungefilterte Fluid in den Innenraum 52 des Filterelements 5 eingebracht, durchströmt die Filtermembran 51 von innen nach aussen und wird anschliessend aus dem Filterraum 6 abgeführt (siehe z.B. Fig. 4).

Die erfindungsgemässe Filtervorrichtung ist insbesondere dadurch gekennzeichnet, dass eine Heizeinrichtung 10 vorgesehen ist, die eine Mikrowellenquelle 11 zur Beaufschlagung des Fluids mit Mikrowellen umfasst. Als Mikrowellenquelle 11 dient beispielsweise ein kommerziell erhältliches Betatron oder sonst eine an sich bekannte Vorrichtung zum Generieren von Mikrowellen. Die Mikrowellen haben üblicherweise eine Frequenz von ein paar Gigahertz, beispielsweise 2.5 GHz. Von der Mikrowellenquelle 11 werden die Mikrowellen mittels eines Wellenleiters 12 auf den Filterraum 6 geleitet, wo sie das Fluid beaufschlagen.

Der Wellenleiter 12 umfasst bei diesem Ausführungsbeispiel einen metallischen Trichter 13 der einerseits mit der Mikrowellenquelle 11 verbunden ist und sich andererseits auf das Filtergehäuse 2 hin öffnet. Der Wellenleiter 12 umfasst ferner eine Ummantelung 14, welche das Filtergehäuse 2 umgibt, sodass der Aussenraum der Filtervorrichtung 1 gegen die Mikrowellen abgeschirmt ist. Somit wird die Ausbreitung der Mikrowellen im wesentlichen auf den Filterraum 6 beschränkt. Der Trichter 13 geht in die Ummantelung 14 über. Die Ummantelung 14 umfasst ein kuppelförmiges Oberteil 141 und einen Boden 142, die lösbar miteinander verbunden sind, beispielsweise mittels einer Verschraubung 143. Das Filtergehäuse 2 ist innerhalb der Ummantelung 14 angeordnet. Der Wellenleiter 12 - hier also der Trichter 13 und die Ummantelung 14 - sind so ausgestaltet, dass sie ihren Aussenraum gegen die Mikrowellen von der Mikrowellenquelle 11 abschirmen. Dazu kann der Wellenleiter 12 als Lochblech, metallisches Gitter oder Netz oder als metallisches Gehäuse ausgestaltet sein. Natürlich ist es auch möglich, den Wellenleiter 12 als Schicht, beispielsweise aus Lack, metallischem Lack oder sonst einem zur Abschirmung von Mikrowellen geeigneten Material auf der inneren und/oder äusseren Oberfläche des Filtergehäuses 2 aufzutragen bzw. aufzubringen.

Das Filtergehäuse 2 ist vorzugsweise aus einem keramischen Werkstoff oder aus einem Polymer, insbesondere aus Perfluoralkoxy-Copolymer (PFA) hergestellt. Natürlich sind auch andere Polymere, insbesondere Hochtemperaturpolymere wie Polytetraflurethylen (PTFE) oder Polyvinylidenfluorid (PVDF) oder Polypropylen (PP) für das Filtergehäuse 2 geeignet. Das Material für das Filtergehäuse 2 sollte so gewählt werden, dass es von dem zu filternden Fluid nicht angegriffen wird, die gewünschte Prozesstemperatur dauerhaft aushält und höchstens ein geringes Absorptionsvermögen für die verwendeten Mikrowellen aufweist. PFA hat den Vorteil, das es sowohl ausgezeichnet resistent gegenüber aggressiven, abrasiven und ätzenden Fluiden ist als auch in Spritzgiessverfahren verarbeitet werden kann. Letzteres hat den Vorteil einer einfachen Produktion.

Ferner umfasst die Filtervorrichtung 1 zwei Sensoren T1, T2 zur Temperaturerfassung. Der Sensor T1 ist so im Bereich des Einlasses 3 angeordnet, dass mit ihm die Temperatur des Fluids beim Eintreten in die Filtervorrichtung 1 bestimmbar ist. Der Sensor T2 ist so im Bereich des Auslasses 4 angeordnet, dass mit ihm die Temperatur beim Verlassen der Filtervorrichtung 1 bestimmbar ist. Zusätzlich ist noch ein Füllstandssensor S vorgesehen, mit dem der Füllstand des Filterraums 6 erfasst werden kann. Insbesondere kann mittels des Füllstandssensors S überprüft werden, ob der Filterrraum 6 vollständig mit dem Fluid gefüllt ist. Die drei Sensoren T1,T2,S sind mit einer Kontrolleinrichtung 20 signalverbunden wie dies in Fig. 1 durch die Leitungen ohne Bezugszeichen angedeutet ist.

Die Kontrolleinrichtung 20 ist auch mit der Mikrowellenquelle 11 signalverbunden und steuert im Betrieb die Mikrowellenquelle 11 an.

Zur Entlüftung des Filterraums 6 sind zwei Entlüftungsöffnungen 15 und 16 vorgesehen, die jeweils mit einem Absperrorgan 151 bzw 161 geöffnet und verschlossen werden können. Die Entlüftungsöffnung 16 ist mit dem Innenraum 52 des Filterelements 5 verbunden und dient somit der auslassseitigen Entlüftung des Filterraums 6. Die Entlüftungsöffnung 15 ist mit dem ausserhalb des Filterelements 5 befindlichen Teil des Filterraums 6 verbunden und dient somit der einlassseitigen Entlüftung des Filterraums 6.

Mittels der Entlüftungsöffnungen 15, 16 können im Filterraum 6 vorhandene Gasblasen entfernt werden.

Während des Betriebs wird das zu filternde Fluid mittels einer in Fig. 1 nicht dargestellte Pumpeinrichtung durch die Filtervorrichtung 1 gefördert. Dabei wird die Filtervorrichtung 1 in vorne bereits beschriebener Weise von dem Fluid durchströmt, wobei die auszufilternden Substanzen von der Filtermembran 51 zurückgehalten werden. Mittels der Heizeinrichtung 10 kann dabei das Fluid im Filterraum 6 durch Beaufschlagung mit Mikrowellen auf eine vorgebbare Temperatur aufgeheizt werden. Bei der Durchströmung der Filtermembran 51 kommt es in dem Fluid zur Bildung von Wirbeln und starken Turbulenzen, die den vorteilhaften Effekt haben, das die Temperatur des Fluids schneller und besser homogenisiert wird.

Mittels des Füllstandssensors S wird überprüft, ob der Filterraum 6 vollständig mit dem Fluid gefüllt. Da beispielsweise PFA die Eigenschaft hat, Mikrowellen in geringem Masse zu absorbieren, sollte der Filterraum 6 während des Betriebs stets vollständig gefüllt sein, damit es nicht zu lokalen Überhitzungen des Filtergehäuses 2 kommt. Der Füllstandssensor S kann beispielsweise ein kapazitiver Sensor sein, welcher anhand der Änderung der Kapazität feststellt, dass der Filterraum nicht vollständig mit Fluid gefüllt ist.

Vorzugsweise ist eine Überwachung vorgesehen, welche die Beaufschlagung des Filterraums 6 mit Mikrowellen verhindert, falls der Filterraum 6 nicht vollständig mit Fluid gefüllt ist. In diesem Ausführungsbeispiel umfasst die Überwachung den Füllstandssensor S sowie eine mit diesem signalverbundene Verriegelungselektronik, die beispielsweise in der Kontrolleinrichtung 20 integriert ist. Falls der Filterraum 6 nicht vollständig mit Fluid gefüllt ist, deaktiviert die Verriegelungselektronik sofort die Mikrowellenquelle 11, sodass keine Beaufschlagung des Filterraums 6 mit Mikrowellen erfolgt. Die Verriegelungselektronik kann auch so ausgestaltet werden, dass die Mikrowellenquelle 11 dann und nur dann aktivierbar ist, wenn von dem Füllstandssensor S ein Signal vorliegt, dass der Filterraum 6 vollständig gefüllt ist.

Durch das Beheizen mittels Mikrowellen, die direkt auf das Fluid einwirken, ist eine räumlich sehr homogene Beheizung gewährleistet. Dadurch wird die Gefahr der Bildung von Gasblasen oder Dampfblasen in dem Fluid drastisch reduziert. Die Bildung von Blasen ist nachteilig, weil diese sich in der Regel an eine der Oberflächen anlagern und dort dann keine Kühlung mehr durch das Fluid erfolgt. Dies führt zur Ausbildung von heissen Flecken (hot spots) die lokale Überhitzungen darstellen bzw. ermöglichen.

Die Mikrowellenquelle 11 wird von der Kontrolleinrichtung 20 angesteuert. Die Energie- bzw. Leistungsabgabe der Mikrowellenquelle wird vorzugsweise mittels Pulsweitenmodulation (PWM: pulse width modulation) kontrolliert bzw. eingestellt. Die Energieabgabe der Mikrowellenquelle 11 wird so eingestellt und auf den Durchfluss (Massendurchfluss) des Fluids abgestimmt, dass einerseits die gewünschte Temperaturerhöhung erzielbar ist und andererseits keine Überhitzungen auftreten. Vorzugsweise wird die Leistungsabgabe der Mikrowellenquelle 11 so optimiert, dass bei minimaler Verweilzeit des Fluids im Filterraumvolumen gerade keine Dampfblasen erzeugt werden.

Mittels der Sensoren T1 und T2 wird während des Betriebs die Temperatur des Fluids am Einlass 3 und am Auslass 4 messtechnisch erfasst und und an die Kontrolleinrichtung übermittelt. Beide Temperaturen zu erfassen, hat den Vorteil, dass auch der Durchfluss durch die Filtervorrichtung 1 bestimmbar ist. Dies kann beispielsweise wie folgt geschehen. Die von der Mikrowellenquelle 11 abgegebene Leistung ist vorgebbar oder bestimmbar. Ferner sind die folgenden Grössen bekannt oder ermittelbar: das Volumen des Filterraums 6 und damit das im Filterraum 6 befindliche Fluidvolumen, die spezifische Wärmekapazität des Fluids, die Wärmekapazität der Filtervorrichtung. Aus der Differenz der Temperatur des Fluids am Auslass 4 und am Einlass 3 ergibt sich die mit der bekannten Leistung der Mikrowellenquelle 11 erzielte Temperaturerhöhung. Unter Berücksichtigung der Wärmekapazität der Filtervorrichtung 1 kann dann mittels der spezifischen Wärmekapazität des Fluids die Menge Fluid bestimmt werden, die diese Temperaturerhöhung erfahren hat. Hieraus ergibt sich der Durchfluss des Fluids durch die Filtervorrichtung 1. Somit kann die erfindungsgemässe Filtervorrichtung 1 auch als Flusssensor zur Bestimmung des Fluidflusses verwendet werden.

Die Auswertemittel zur Bestimmung des Durchflusses sind beispielsweise in der Kontrolleinrichtung 20 integriert. Aus der Differenz der Temperatur des Fluids am Auslass 4 und der Temperatur des Fluids am Einlass 3 und der von der Mikrowellenquelle 11 abgegebenen Leistung kann somit der Durchfluss des Fluids, das heisst Masse an Fluid pro Zeit, bestimmt werden. Natürlich ist es somit auch möglich, den Durchfluss zu regeln.

Wie vorne bereits erwähnt, wird die Mikrowellenquelle 11 vorzugsweise mittels Pulsweitenmodulation kontrolliert, das heisst die Mikrowellenquelle 11 wird mit einer konstanten Leistung betrieben und die von ihr abgegebene Leistung wird über die Einschaltzeit bestimmt bzw. geregelt.

Durch die unmittelbare Einwirkung der Mikrowellen auf das zu heizende Fluid ergibt sich eine kurze thermische Zeitkonstante, das heisst, das System aus Heizeinrichtung 10 und zu beheizendem Fluid weist eine geringe thermische Trägheit auf. Dies ist insbesondere im Hinblick auf eine Regelung der Auslasstemperatur des Fluids ein grosser Vorteil. Um die Temperatur des Fluids am Auslass 4 auf einen vorgebbaren Sollwert zu regeln, kann beispielsweise wie folgt vorgegangen werden. Mittels des Sensors T2 wird die Temperatur des Fluids am Auslass 4 als Istwert bestimmt. Der Istwert wird mit dem Sollwert verglichen. Aus diesem Vergleich ergibt sich die Differenztemperatur, um die der Istwert vom Sollwert abweicht. Bei bekanntem Durchfluss, bekanntem Volumen des Filterraums 6 und bekannten Wärmekapazitäten des Fluids und der Filtervorrichtung 1 lässt sich dann die Leistung bestimmen, die dem Fluid zugeführt werden muss, um am Auslass 4 die gewünschte Temperatur zu erreichen. Die Mikrowellenquelle 11 wird dann von der Kontrolleinrichtung 20 so angesteuert, dass sie die entsprechende Leistung in Form von Mikrowellen emittiert. Bei der PWM-Kontrolle der Mikrowellenquelle 11 wird die Leistung der Mikrowellenquelle 11 über die Zeit geregelt, während der die Mikrowellenquelle 11 eingeschaltet ist.

Natürlich kann die Temperatur des Fluids am Auslass auch ohne die explizite Bestimmung der benötigten Leistung mit bekannten Regelverfahren geregelt werden.

Die Wahl des Materials für die Filtermembran 51 und die Porengrösse der Filtermembran 51, welche die Trenngrenze festlegt, hängt vom Anwendungsfall ab. Mit der Trenngrenze ist dabei die Grösse der Partikel gemeint, die von der Filtermembran 51 gerade noch zurückgehalten wird. Mit dem Begriff Filtermembran sind auch Siebe, Siebbleche oder netzartige Strukturen zur Filterung gemeint.

Im Falle von Anwendungen in der Halbleiterindustrie, beispielsweise bei CMP-Prozessen oder beim Filtern von Fotolacken werden häufig Hochtemperaturpolymere als Material für die Filtermembran 51 verwendet. Beispiele sind hier PTFE und PVDF. Die Porengrösse richtet sich nach der Feinheit der gewünschten Filterung. Sie kann beispielsweise im Mikrometerbereich liegen und 10-50 Mikrometer betragen. Für sehr feine Filterungen können aber auch noch kleinere Porengrössen gewählt werden. Die Trenngrenze kann 100 Nanoweter oder noch weniger betragen.

Selbstverständlich sind auch Filtermembrane 51 aus anderen Materialien möglich, beispielsweise aus anderen Kunststoffen, Verbundwerkstoffen, Keramiken oder keramisch beschichteten Substanzen. Das Material sollte so gewählt sein, dass es keine zu stark abschirmende oder absorbierenden Eigenschaften für Mikrowellen aufweist. Die Filtermembrane können hergestellt werden, indem Folien oder dünne Materiallagen gestanzt, gebohrt, gelasert, Elektronenstrahl gelocht oder Wasserstrahl geschnitten werden, wobei grundsätzlich auch andere Techniken in Frage kommen.

Selbstverständlich ist es nicht notwendig, dass das Filterelement im wesentlichen zylindrisch ausgestaltet ist oder überhaupt einen Innenraum aufweist. Das Filterelement kann z. B. auch als planare Membran oder als planares Sieb ausgestaltet sein.

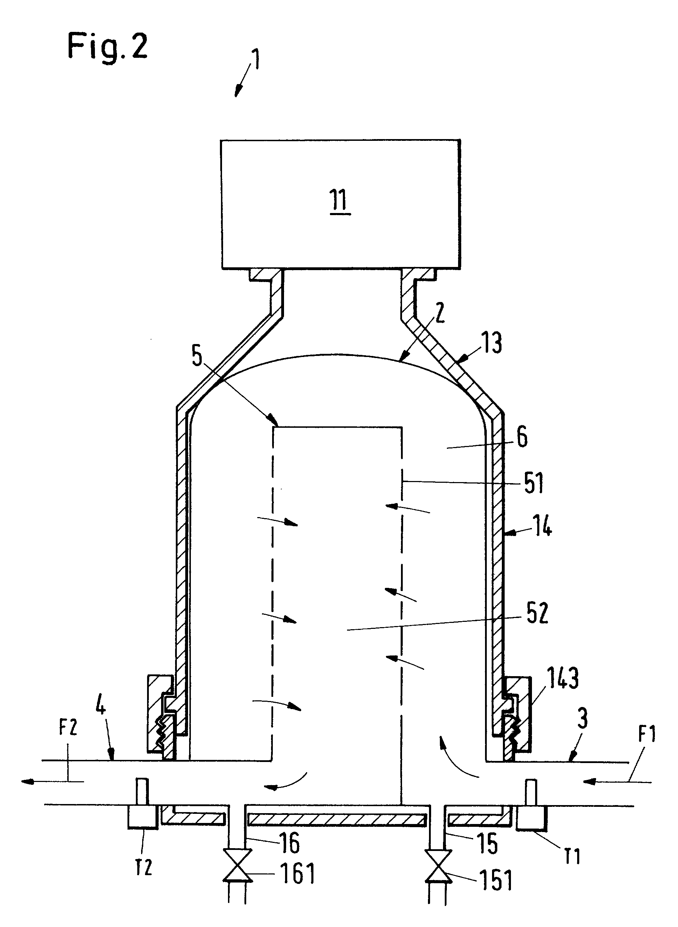

Fig. 2 zeigt in einer zu Fig. 1 analogen Darstellung eine Variante des ersten Ausführungsbeispiels. Die Bezugszeichen haben die gleiche Bedeutung wie in Fig. 1. Die Kontrolleinrichtung 20 ist nicht dargestellt. Bei der in Fig. 2 gezeigten Variante ist die Mikrowellenquelle 11 an einer anderen Stelle platziert, nämlich darstellungsgemäss oberhalb des Filtergehäuses 2. Der Trichter 13 ist bezüglich seines Öffnungswinkels an das obere Ende des Filtergehäuses 2 angepasst, derart, dass das darstellungsgemäss obere Ende des Filtergehäuses 2 in den Trichter hineinragt. Durch diese Massnahme lässt sich eine räumlich noch homogenere Durchdringung des Filterraums 6 mit Mikrowellen erzielen.

Es sind noch zahlreiche andere Varianten möglich, wo die Mikrowellenquelle 11 relativ zum Filtergehäuse platziert werden kann. Je nach Anwendungsfall und Ausgestaltung kann die Platzierung der Mikrowellenquelle 11 und/oder die Ausgestaltung des Wellenleiters 12 optimiert werden, um eine möglichst gute und homogene Einkopplung der Mikrowellenenergie in den Filterraun zu gewährleisten.

Es versteht sich, dass auch mehr als eine Mikrowellenquelle vorgesehen sein kann. Es können beispielsweise zwei Mikrowellenquellen sich gegenüber liegend vorgesehen sein oder es können mehrere Mikrowellenquellen um den Umfang des Filtergehäuses 2 herum angeordnet sein.

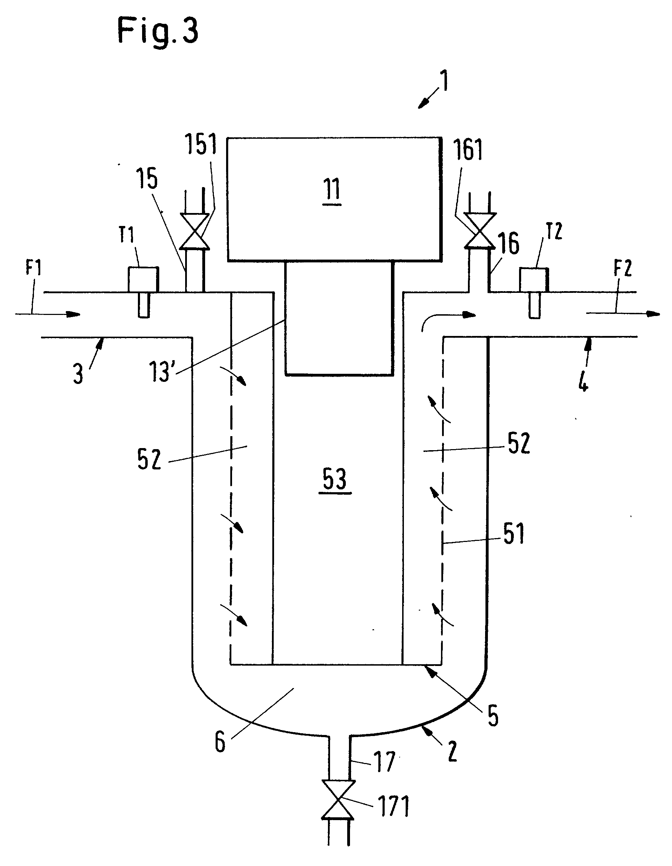

Fig. 3 zeigt ein zweites Ausführungsbeispiel der erfindungsgemässen Filtervorrichtung 1. Im Folgenden wird nur auf die Unterschiede zum ersten Ausführungsbeispiel eingegangen. Ansonsten gelten die Erläuterungen des ersten Ausführungsbeispiels in sinngemäss gleicher Weise auch für das zweite Ausführungsbeispiel.

Bei dem zweiten Ausführungsbeispiel ist die Mikrowellenquelle 11 so angeordnet, dass die Mikrowellen aus dem Innern des Filterelements 5 in den Filterraum 6 eingebracht werden.

Der Innenraum 52 des Filterelements 5 ist als zylindrischer Ringraum ausgestaltet, der einen zentrale Ausnehmung (oder Durchführung) 53 umgibt, in welche das Fluid nicht eindringen kann.

Anstelle des Trichters 13 ist ein rohrförmiges Leitelement 13' vorgesehen, dessen eines Ende mit der Mikrowellenquelle 11 verbunden ist und dessen anderes Ende in der zentralen Ausnehmung 53 angeordnet ist. Auf diese Weise werden die von der Mikrowellenquelle 11 generierten Mikrowellen in das Innere des Filterelements 5 geführt und durchdringen von dort aus den gesamten Filterraum 6. Diese Massnahme hat den Vorteil, dass das aufzuheizende Fluid selbst als Schirm dient, welcher die Mikrowellen absorbiert und ein Austreten der Mikrowellen in den Aussenraum bzw. in die Umwelt wirkungsvoll verhindert. Folglich ist es nicht mehr vonnöten, einen separaten, ausserhalb des Filtergehäuses 2 angeordneten Schirm vorzusehen. Auf die Ummantelung 14, die bei dem ersten Ausführungsbeispiel vorgesehen war (siehe Fig. 1), kann bei dem zweiten Ausführungsbeispiel verzichtet werden.

Die Mikrowellenquelle 11 ist unmittelbar an dem Filterelement 5 angeordnet. Falls es die Abmessungen bzw. die Platzverhältnisse erlauben, ist es auch möglich, die Mikrowellenquelle 11 selbst im Innern des Filterelements 5, also beispielsweise in der zentralen Ausnehmung oder Durchführung 53 anzuordnen. Auch bei dem zweiten Ausführungsbeispiel ist es möglich, mehr als eine Mikrowellenquelle 11 vorzusehen.

Bei dem zweiten Ausführungsbeispiel (Fig. 3) ist die Filtereinrichtung in einer anderen Gebrauchslage dargestellt als in den Fig. 1 und 2. Zudem ist an der darstellungsgemäss tiefsten Stelle des Filtergehäuses 2 noch ein Ablass 17 vorgesehen, um Fluid aus dem Filterraum abzulassen. Der Ablass 17 ist mit einem Absperrorgan zum 171 zum Öffnen und Schliessen versehen.

Fig. 4 zeigt ein weiteres Ausführungsbeispiel einer erfindungsgemässen Filtervorrichtung, bei welchem eine Pumpeinrichtung 40 vorgesehen ist, um das Fluid durch die Filtervorrichtung 1 zu befördern. Um eine möglichst kompakte Ausgestaltung der Filtervorrichtung 1 zu erzielen, ist die Pumpeinrichtung in den Bereich des Einlasses 3 integriert.

Die Erläuterungen bezüglich des ersten und zweiten Ausführungsbeispiels gelten in sinngemäss gleicher Weise auch für das in Fig. 4 dargestellte Ausführungsbeispiel. Die Bezugszeichen haben die gleiche Bedeutung, die bereits erklärt wurde. Im Folgenden wird nur auf die Änderungen und Unterschiede eingegangen.

Bei dem in Fig. 4 dargestellten Ausführungsbeispiel sind im Vergleich zu den Darstellungen in den Fig. 1-3 der Einlass 3 und der Auslass 4 vertauscht, das heisst bei dem Ausführungsbeispiel gemäss Fig. 4 wird das Fluid in den Innenraum 52 des Filterelements 5 eingebracht, durchströmt die Filtermembran 51 von innen nach aussen und verlässt dann als gefiltertes Fluid den Filterraum 6 durch den Auslass 4. Dies ist in Fig. 4 durch die Pfeile ohne Bezugszeichen angedeutet.

Die Pumpeinrichtung 40 ist darstellungsgemäss unterhalb des Filterelements 5 am Filtergehäuse 2 und innerhalb der Ummantelung 14 angeordnet. Die Pumpeinrichtung 40 ist lösbar mit dem Filtergehäuse 2 verbunden, sodass sie problemlos vom Filtergehäuse 2 gelöst werden kann, beispielsweise um das Filterelement 5 auszutauschen.

Die Pumpeinrichtung 40 umfasst vorzugsweise eine Rotationspumpe 60, weil Rotationspumpen zum einen hohe Förderleistungen erlauben und zum anderen eine kontinuierliche Förderung ermöglichen, die sich vorteilhaft auf eine möglichst homogene Erwärmung des Fluids auswirkt. Zudem weisen Rotationspumpen keine Membrane auf, die durch stark abrasive oder aggressive Substanzen angegriffen werden können.

Die Rotationspumpe 60 umfasst einen Rotor 61, auf welchem mehrere Flügel 611 zum Fördern des Fluids vorgesehen sind.

Die Rotationspumpe 60 umfasst ferner einen Stator 62 mit einer Statorwicklung 621, um den Rotor 61 anzutreiben. Die Kontroll- und Steuereinrichtung für die Rotationspumpe 60 sind in Fig. 4 aus Gründen der Übersicht nicht dargestellt.

Insbesondere für solche Fluide, die Festkörperpartikel enthalten (z. B. Slurry) oder die hochrein sind, hat die Rotationspumpe 60 vorzugsweise einen vollständig magnetisch gelagerten Rotor 61, das heisst der Rotor 61 ist bezüglich des Stators 62 berührungslos magnetisch gelagert. Die Abwesenheit mechanischer Lager für den Rotor 61 hat mehrere Vorteile. So wird das Problem vermieden, dass abrasive Partikel mechanische Lager beschädigen können. Ferner besteht keine Gefahr der Verunreinigung des Fluids durch Schmiermittel oder Lagerabrieb. Auch werden Dichtungsprobleme vermieden.

Apparativ besonders einfach und energetisch günstig ist es, wenn der Rotor 61 permanentmagnetisch ist. Dazu umfasst der Rotor 61 einen Permanentmagnet 612. Die Magnetisierung des Permanentmagneten ist in Fig. 4 durch den Pfeil mit dem Bezugszeichen M dargestellt.

Eine besonders bevorzugte Rotationspumpe 60 wird z. B. in der EP-A-0 819 330 bzw. der US-A-6,100,618 offenbart. Diese Rotationspumpe weist einen sogenannten Integralrotor auf und ist als lagerloser Motor ausgestaltet. Mit dem Begriff Integralrotor ist dabei gemeint, dass der Pumpenrotor und der Rotor des die Pumpe antreibenden Motors identisch sind. Der Rotor 61 fungiert sowohl als Rotor des motorischen Antriebs als auch als Rotor der Pumpe. Mit dem Begriff lagerloser Motor ist gemeint, dass der Rotor vollkommen magnetisch gelagert ist, wobei keine separaten Magnetlager vorgesehen sind. Der Stator 62 ist sowohl Stator des elektrischen Antriebs als auch Stator der magnetischen Lagerung. Dazu umfasst die Statorwicklung 621 eine Antriebswicklung der Polpaarzahl p sowie eine Steuerwicklung der Polpaarzahl p±1. Damit ist es möglich, den Rotor 61 sowohl anzutreiben als auch vollkommen berührungslos magnetisch im Stator zu lagern. Bezüglich weiterer Details einer solchen Rotationspumpe sei hier auf die bereits zitierten Dokumente verwiesen.

Während des Betriebs generiert die von der nicht dargestellten Kontroll- und Steuereinrichtung angesteuerte Statorwicklung 621 ein Antriebsdrehfeld, das ein Drehmoment auf den Rotor 61 bewirkt und diesen in Rotation versetzt. Ferner generiert die Steuerwicklung der Statorwicklung 621 ein magnetisches Steuerfeld, mit welchem die Position des Rotors 61 bezüglich des Stators 62 regelbar ist.

Durch die Rotation des Rotors 61 wird das Fluid durch den Einlass 3 angesaugt und durch die Filtermembran 51 zum Auslass 4 gefördert. Dabei kann das Fluid wie vorne beschrieben im Filterraum 6 mittels von der Mikrowellenquelle 11 generierter Mikrowellen auf eine vorgebbare Temperatur geheizt werden.

Das in Fig. 4 dargestellte Ausführungsbeispiel stellt eine äusserst kompakte Vorrichtung dar, die vier Funktionen ausüben kann, nämlich das Ausfiltern von Substanzen aus dem Fluid, das Fördern des Fluids durch die Filtervorrichtung, das Heizen bzw. das Regeln des Fluids auf eine vorgebbare Temperatur und das Bestimmen bzw. Regeln des Durchflusses des Fluids.

Aufgrund der sehr kompakten und platzsparenden Ausgestaltung ist die erfindungsgemässe Filtervorrichtung insbesondere auch für solche Anwendungen geeignet, wo ein geringer Platzbedarf wünschenswert ist. Dies sind beispielsweise Anwendungen in Reinräumen aller Reinheitsstufen bzw. Reinheitsklassen. Insbesondere die Reinräume der höchsten Reinheitsklasse sind sehr kostenintensiv, sodass hier ein möglichst geringer Platzbedarf der eingesetzten Vorrichtungen einen grossen Vorteil mit sich bringt.

Die erfindungsgemässe Filtervorrichtung eignet sich insbesondere für Prozesse in der Halbleiterindustrie, bei der Herstellung von Chips oder Ics, beispielsweise als Prozessfilter in CMP-Prozessen.

Die erfindungsgemässe Filtervorrichtung ist auch geeignet für alle Prozesse, bei denen hohe Anforderungen an die Reinheit zu stellen sind, beispielsweise im Bereich der Medizin, Medizintechnik, Pharmazie, Lebensmittelindustrie oder für Prozesse, bei denen mit chemisch sehr aggressiven Fluiden gearbeitet wird.

## Patentansprüche

1. Filtervorrichtung zum Ausfiltern von Substanzen aus einem Fluid mit einem Filtergehäuse (2), das einen Filterraum (6) begrenzt und das einen Einlass (3) und einen Auslass (4) für das zu filternde Fluid aufweist, sowie mit einem im Filterraum (6) vorgesehene Filterelement (5), welches so ausgestaltet und angeordnet ist, dass im Betriebszustand das zu filternde Fluid nur durch das Filterelement (5) vom Einlass (3) zum Auslass (4) des Filtergehäuses (2) strömen kann, **dadurch gekennzeichnet, dass** eine Heizeinrichtung (10) zum Heizen des Fluids vorgesehen ist, die eine Mikrowellenquelle (11) zur Beaufschlagung des Fluids mit Mikrowellen umfasst.

2. Vorrichtung nach Anspruch 1, bei welcher ein Wellenleiter (12) vorgesehen ist, welcher die Ausbreitung der Mikrowellen im wesentlichen auf den Filterraum (6) beschränkt.

3. Vorrichtung nach einem der vorangehenden Ansprüche, bei welchem das Filterelement (5) einen Innenraum (52) aufweist, der von einer Filtermembran (51) umgeben wird.

4. Vorrichtung nach Anspruch 3, bei welcher die Mikrowellen aus dem Innern des Filterelements (5) in den Filterraum (6) eingebracht werden.

5. Vorrichtung nach einem der vorangehenden Ansprüche, bei welcher Sensoren (T1 ,T2) vorgesehen sind, um die Temperatur des Fluids am Einlass (3) und die Temperatur des Fluids am Auslass (4) zu bestimmen.

6. Vorrichtung nach einem der vorangehenden Ansprüche mit einem Füllstandssensor (S) zum Überwachen des Füllstands des Filterraums (6).

7. Vorrichtung nach einem der vorangehenden Ansprüche mit einer Überwachung, welche die Beaufschlagung des Filterraums (6) mit Mikrowellen verhindert, falls der Filterraum (6) nicht vollständig mit Fluid gefüllt ist.

8. Vorrichtung nach einem der vorangehenden Ansprüche mit einer Pumpeinrichtung (40) zum Fördern des Fluids vom Einlass(3) zum Auslass (4).

9. Vorrichtung nach Anspruch 7, wobei die Pumpeinrichtung (40) eine Rotationspumpe (60) umfasst, die einen Integralrotor (61) aufweist und die als lagerloser Motor ausgestaltet ist.

10. Vorrichtung nach einem der vorangehenden Ansprüche, wobei das Filterelement (5) als austauschbare Filterpatrone ausgestaltet ist.

11. Vorrichtung nach einem der vorangehenden Ansprüche, wobei eine Kontrolleinrichtung vorgesehen ist, die Mittel zur Bestimmung des Durchflusses mit Hilfe der Differenz aus der Temperatur des Fluids am Auslass (4) und der Temperatur des Fluids am Einlass (3) umfasst.
